# EUROPEAN PATENT SPECIFICATION

(11) **EP 0 762 609 B1**
(45) Date of publication and mention of the grant of the patent: **20.09.2000**
(21) Application number: 96118356.3
(22) Date of filing: 07.10.1993
(51) Int. Cl.: H02K 7/08, H02K 5/173, F16C 19/18, G11B 19/20

(54) **Compound ball bearing**
Kompound Kugellager
Roulement composé à billes

(30) Priority: 07.10.1992 JP 29385892; 09.11.1992 JP 32364692
(43) Date of publication of application: 12.03.1997
(62) Divisional of application: 93307965.9
(73) Proprietor: MINEBEA KABUSHIKI-KAISHA, Kitasaku-gun, Nagano-ken (JP)
(72) Inventor: Obara, Rikuro, Minebea K.K., Kitasaku-gun, Nagano-ken (JP); Tatsuno, Katashi, Minebea K.K., Kitasaku-gun, Nagano-ken (JP)
(74) Representative: Johnstone, Douglas Ian

(56) References cited:
- DE-A- 3 540 363
- US-A- 4 713 704
- US-A- 5 045 738
- US-A- 5 128 571
- PATENT ABSTRACTS OF JAPAN vol. 13, no. 70 (P-829), 17 February 1989 & JP 63 255869 A (MATSUSHITA), 24 October 1988,
- PATENT ABSTRACTS OF JAPAN vol. 9, no. 18 (P-376) 27 July 1985 & JP 60 052 953 A (HITACHI SEISAKUSHO KK) 26 March 1985

## Description

This invention relates to ball-bearings mainly used for office automation (OA) apparatus motors and components thereof eg in computers.

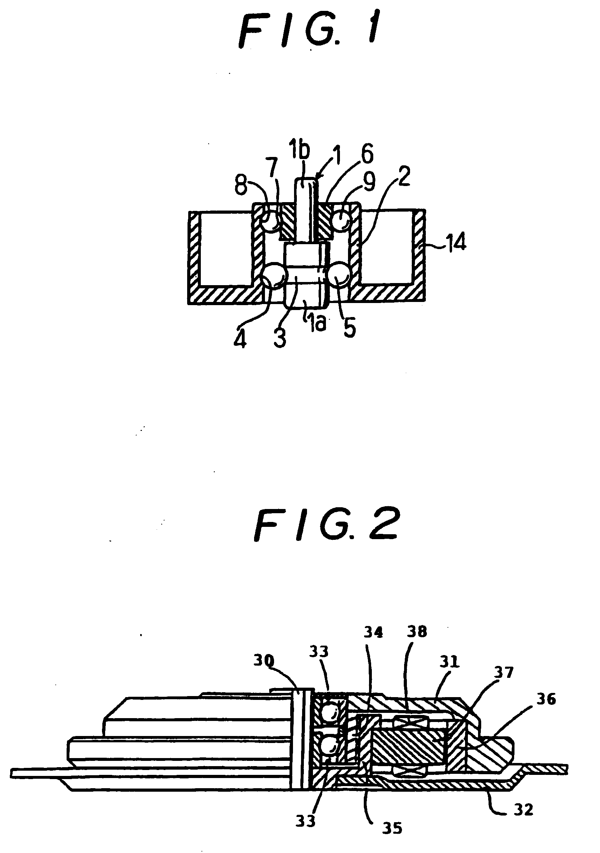

A usual spindle motor used for OA apparatuses, as shown in Figure 2 comprises a spindle 30, a rotor hub 31 and a base flange 32. The spindle is supported by a ball-bearing 33 which comprises an inner and an outer ring provided in a sleeve 34. The motor further comprises a yoke 37 supported on the base flange 32 by means of a yoke holder 35 and supporting a coil means 38. A permanent magnet 36 is connected for rotation with the hub 31. These components are individually formed as separate members.

A further prior art bearing assembly for OA apparatus is described in Patent US 4,713,704 (on which the precharacterising part of claim 1 is based). The bearing assembly includes a motor flange which is separately formed with respect to and connected to a sleeve in which two inner races are formed. A first row of balls runs between one of the inner races and a race formed in an outer surface of a larger diameter portion of a central shaft and a second row of balls runs between the other inner race and a race formed in an outer surface of a ring fitted on a smaller diameter portion of the shaft.

Another prior art bearing assembly for OA apparatus is described in Patent US 5,128,571 in which a motor base flange is integrally formed with a sleeve. The sleeve supports outer bearing rings of two bearings the inner rings of which are mounted on a parallel sided central shaft.

Since the prior art motor components are thus independent parts, the motor has a large number of components. Besides, it is necessary to assemble these components, leading to a large number of steps involved in the motor's manufacture and thus to a high cost of manufacture.

Further, in the prior art ball-bearing structure, it is not easy to obtain the vibration accuracy of the spindle, and it is difficult to expect substantial improvement of vibration accuracy. Accordingly avoidance of vibration in prior art spindle motors is difficult to achieve.

An object of the invention is to reduce the number of components and number of steps of assembling apparatus such as that described above, thus permitting reduction of the cost of manufacture.

Another object of the invention is to provide a compound ball-bearing, in which an inner ring can be secured in a proper position by facilitating pre-loading or a press fitting technique, thus obtaining improved spindle vibration accuracy, and reducing spindle motor vibration.

In the compound ball bearing according to the invention, a flange for a motor base is moulded as a one-piece moulding with the sleeve as a component of the bearing body. More specifically, according to the invention there is provided a compound ball bearing comprising a bearing assembly including a spindle which is a stepped spindle having a larger diameter portion and a smaller diameter portion, a sleeve surrounding said spindle having first and second inner races formed therein, a first row of balls between said first inner race and an outer race in the larger diameter portion of the spindle and a second row of balls between said second inner race and an outer race formed in an inner ring fitted on the smaller diameter portion of said spindle characterised in that said sleeve is integrally formed in one piece with a base flange of a motor.

The invention will now be described by way of example only with reference to the accompanying drawings in which:
Figure 1 is a sectional view showing an embodiment of the invention;
Figure 2 is a view, partly in section, showing a typical prior art spindle motor.

Figure 1 shows an embodiment of the compound ball-bearing according to the invention. Referring to Figure 1 there is shown a double-row ball bearing, in which a spindle 1 and a sleeve 2 corresponding thereto as an outer ring form a bearing body for retaining bearing balls 5 and 9 provided in two rows.

The spindle 1 is stepped and has a larger and a smaller diameter portion 1a and 1b respectively. The larger diameter portion la has an outer race 3 for a first row of balls 5, while the sleeve 2 has an inner race 4 corresponding to the outer race 3 of the spindle. Balls 5 in the first row are provided between the two races 3 and 4. On the smaller diameter portion 1b of the spindle, an inner ring 6 is fitted. A second row of balls 9 is provided between an outer race 7 formed in the inner ring and a corresponding inner race 8 formed in the sleeve 2.

A flange 14 which serves as a motor base is moulded as a one-piece moulding with the sleeve 2.

The inner ring 6 which has been loosely fitted on the spindle, is pre-loaded and secured with an adhesive to the spindle.

Each ball is suitably made of a high carbon chromium bearing steel.

According to the invention, the motor base flange is moulded as a one-piece moulding with the sleeve. Thus, unlike the prior art bearing structure, in which all of the hub, the flange, the yoke holder or the like are separate from the bearing body, it is possible to readily assemble parts when manufacturing a motor. Efficient assembling is obtainable by using machines thus reducing the cost of motor manufacture. These merits are highly beneficial in industrial production. Furthermore when a part such as a flange is moulded as a one-piece moulding with the sleeve, the motor manufacture or motor component assembling can be carried our without need of centring of the spindle with respect to any of the components noted above. Thus it is possible to provide a motor or the like, which is free from shaft vibration and has high accuracy of rotation.

Further, the inner or outer ring can be readily pre-loaded, for installation on the appropriate part, by applying a pressure to it in the axial direction. The inner ring thus can be secured in a proper position to obtain a highly accurate ball-bearing.

## Claims

1. A compound ball bearing comprising a bearing assembly including a spindle (1) which is a stepped spindle having a larger diameter portion (1a) and a smaller diameter portion (1b), a sleeve (2) surrounding said spindle (1) having first and second inner races (4, 8) formed therein, a first row of balls (5) between said first inner race (4) and an outer race (3) in the larger diameter portion (1a) of the spindle and a second row of balls (9) between said second inner race (8) and an outer race (7) formed in an inner ring (6) fitted on the smaller diameter portion (1b) of said spindle (1) characterised in that said sleeve (2) is integrally formed in one piece with a base flange (14) of a motor.

## Patentansprüche

1. Kombiniertes Kugellager, umfassend ein Lagersystem, das eine Spindel (1) aufweist, die eine gestufte Spindel mit einem breiteren Abschnitt (1a) und einem schmäleren Abschnitt (1b) ist, eine die genannte Spindel (1) umgebende Hülse (2), in der eine erste und eine zweite innere Laufbahn (4, 8) ausgebildet sind, eine erste Reihe Kugeln (5) zwischen der genannten ersten inneren Laufbahn (4) und einer äußeren Laufbahn (3) im breiteren Abschnitt (1a) der Spindel und eine zweite Reihe Kugeln (9) zwischen der genannten zweiten inneren Laufbahn (8) und einer in einem inneren Ring (6) ausgebildeten äußeren Laufbahn (7) am schmäleren Abschnitt (1b) der genannten Spindel (1), dadurch gekennzeichnet, daß die genannte Hülse (2) einstückig mit einem Basisflansch (14) eines Motors ausgebildet ist.

## Revendications

1. Un roulement à billes composite englobant un ensemble de roulement qui inclut un axe (1) qui est un axe à gradins ayant une partie à diamètre plus grand (1a) et une partie à diamètre plus petit (1b), une douille (2) qui entoure ledit axe (1) ayant une première et une deuxième bagues de roulement intérieures (4, 8) formées à l'intérieur, une première rangée de billes (5) entre ladite première bague intérieure (4) et une bague extérieure (3) dans la partie à diamètre plus grand (1a) de l'axe et une seconde rangée de billes (9) entre ladite seconde bague de roulement intérieure (8) et une bague extérieure (7) formée dans un anneau intérieur (6) adapté sur la partie à diamètre plus petit (1b) dudit axe (1), caractérisé en ce que ladite douille (2) est formée intégralement d'une seule pièce avec la bride d'embase (14) d'un moteur.
